# EUROPEAN PATENT SPECIFICATION

(11) **EP 2 775 235 B1**
(45) Date of publication and mention of the grant of the patent: **15.08.2018**
(21) Application number: 14162844.6
(22) Date of filing: 28.02.2011
(51) Int. Cl.: F25B 31/00

(54) **Air conditioner with a compressor and a heat storage device**
Klimaanlage mit einem Kompressor und einer Wärmespeichervorrichtung
Climatiseur avec un compressuer et un dispositif de stockage de chaleur

(30) Priority: 31.08.2010 JP 2010193433
(43) Date of publication of application: 10.09.2014
(62) Divisional of application: 11821226.5
(73) Proprietor: Panasonic Corporation, Kadoma-shi Osaka 571-8501 (JP)
(72) Inventor: Oka, Kouji, Osaka, 540-6207 (JP); Takahashi, Masatoshi, Osaka, 540-6207 (JP); Sugio, Takashi, OSAKA, 540-6207 (JP); Shimizu, Akihiko, Osaka, 540-6207 (JP); Imasaka, Toshiyuki, Osaka, 540-6207 (JP); Kamoda, Hirokazu, Osaka, 540-6207 (JP)
(74) Representative: Eisenführ Speiser

(56) References cited:
- JP-A- H03 160 243

## Description

### TECHNICAL FIELD

The present invention relates to an air conditioner having a heat storage device disposed around and held in contact with a compressor and accommodating a heat storage material that stores therein heat generated by the compressor.

### BACKGROUND ART

A conventional heat pump air conditioner of this kind conducts defrosting during heating by switching a four-way valve from a heating cycle to a cooling cycle when frost has adhered to an outdoor heat exchanger. In this defrosting method, an indoor fan is at a stop, but cold air flows gradually out of an indoor unit, thus posing a problem of warmth being lost.

In view of this, another air conditioner has been proposed having a heat storage device mounted on a compressor in an outdoor unit for the purpose of defrosting by making use of waste heat of the compressor that has been stored in a heat storage tank during heating (see, for example, Patent Document 1).

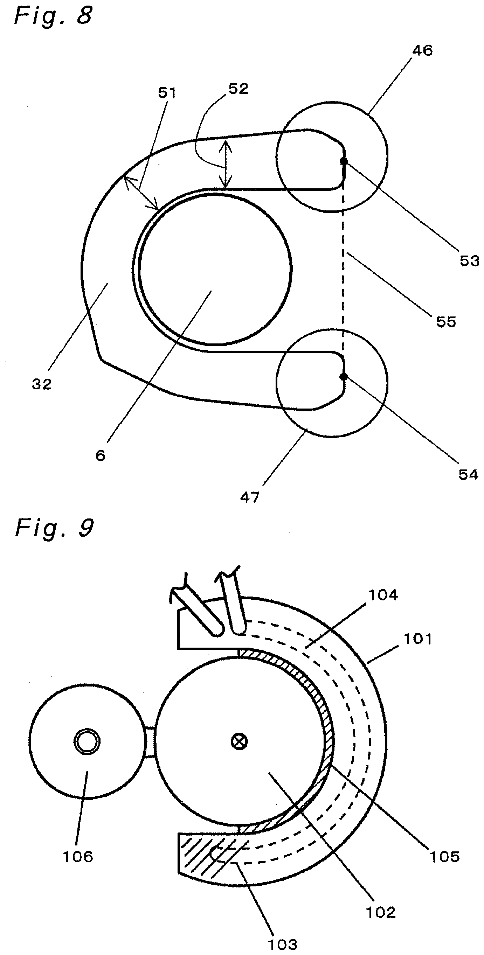

Fig. 9 is a top plan view of an example of a conventional heat storage device. In Fig. 9, a heat storage tank 101 accommodates therein a heat storage material 103 for storing waste heat generated by a compressor 102 and a heat storage heat exchanger 104 for exchanging heat with a refrigerant to effectively utilize heat stored in the heat storage material 103. Also, the heat storage tank 101 is held in contact with the compressor 102 via a heat-transfer sheet 105. The compressor 102 is provided with an accumulator 106 that prevents a liquid-phase refrigerant from entering the compressor 102.

In the conventional heat storage device as shown in Fig. 9, as described above, the heat storage tank 101 is disposed around the compressor 102 so as to be held in contact therewith via the heat-transfer sheet 105, but the heat storage tank 101 is not in contact with the compressor 102 over the entire circumference thereof and part of the former is cut out so as not to interfere with the accumulator 106.

### Patent Document(s)

Patent Document 1: JP 3-160242 A

### SUMMARY OF INVENTION

### Problems to be solved by the Invention

In the above-described conventional construction, end portions of the heat storage tank 101 confronting the cutout portion are thinner than other portions, but because a pipe for heat exchange is required to be laid in the heat storage heat exchanger 104 as long as possible for efficient heat exchange, inlet and outlet pipes of the heat storage heat exchanger 104 are preferably positioned at the end portions of the heat storage tank 101. In spite of this fact, a problem arises that there is no space to seal, for example, gaps between the inlet and outlet pipes of the heat storage heat exchanger 104 and respective holes defined in a lid of the heat storage tank 101 through which the inlet pipe and outlet pipes extend.

Also, in order to secure a thermal capacity to store heat in the heat storage device, the heat storage device is required to have a certain capacity while conserving space as a whole, but the conventional construction is also problematic in compatibility thereof.

JP H03 160243 discloses an air conditioner according to the preamble of claim 1.

The present invention has been developed to overcome the above-described disadvantages inherent in the prior art and is intended to provide a heat storage device for heat exchange capable of securing a capacity while realizing space saving.

### Means to Solve the Problems

In accomplishing the above objective, the present invention is directed to an air conditioner having the features of claim 1.

Because this configuration can increase lengths of opposite end portions of the heat storage tank, the heat storage tank can be easily mounted to the compressor with the opposite end portions broadened outwardly. Accordingly, the heat storage tank can be brought into closer contact with the compressor, thus resulting in an increase in defrosting performance during defrosting.

### Effects of the Invention

According to the present invention, the volume of the heat storage material that contributes to the defrosting performance can be increased. In particular, even if there is not much installation space for the heat storage device and space saving is accordingly required, the present invention can secure a capacity of the heat storage tank while making effective use of a space between the compressor and an accumulator.

### BRIEF DESCRIPTION OF THE DRAWINGS

Fig. 1 is a piping diagram of an air conditioner having a heat storage device according to the present invention.
Fig. 2 is a piping diagram of the air conditioner of Fig. 1, depicting operation thereof and a flow of refrigerant during normal heating.
Fig. 3 is a piping diagram of the air conditioner of Fig. 1, depicting the operation thereof and a flow of refrigerant during defrosting/heating.
Fig. 4 is a perspective view of the heat storage device according to the present invention with a compressor and an accumulator installed.
Fig. 5 is a view of the heat storage device according to the present invention, depicting end portions of a heat storage tank.
Fig. 6 is a view of the heat storage device according to the present invention, depicting a configuration of a heat storage heat exchanger.
Fig. 7 is a perspective view of the heat storage tank according to the present invention with a lid installed on a top surface thereof.
Fig. 8 is a view of the heat storage device according to the present invention, depicting a cross-sectional shape of the heat storage tank.
Fig. 9 is a horizontal sectional view of a conventional heat storage device.

### DESCRIPTION OF EMBODIMENTS

In the present invention, a heat storage device is disposed around and held in contact with a compressor and includes a heat storage material for storing heat generated by the compressor therein, a heat storage tank for accommodating the heat storage material therein, and a heat storage heat exchanger accommodated within the heat storage tank, wherein the compressor is held in contact with the heat storage tank in an angular range not greater than 200 degrees of an entire circumference of the compressor and a line connecting opposite end edges of the heat storage tank does not pass across a projection plane of the compressor.

Because this configuration can increase lengths of opposite end portions of the heat storage tank, the heat storage tank can be easily mounted to the compressor with the opposite end portions broadened outwardly. Accordingly, the heat storage tank can be brought into closer contact with the compressor, thus resulting in an increase in defrosting performance during defrosting.

If a heat-transfer sheet is interposed between the compressor and the heat storage tank, heat from the compressor can be efficiently transferred to the heat storage material.

In the heat storage device according to the present invention, the heat storage tank is made of a resin and mounted to the compressor from the side, thereby facilitating assemblage of the heat storage device.

An embodiment of the present invention is explained hereinafter with reference to the drawings, but the present invention is not limited to the embodiment.

### (Embodiment 1)

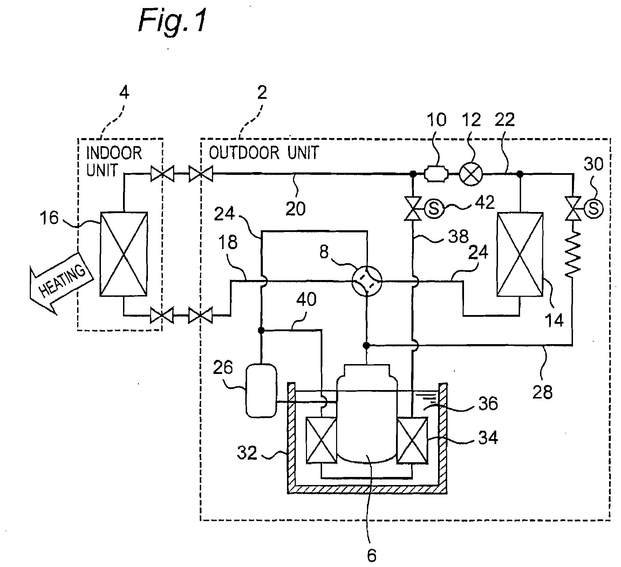

Fig. 1 depicts a piping diagram of an air conditioner having a heat storage device according to the present invention. The air conditioner includes an outdoor unit 2 and an indoor unit 4 connected to each other via refrigerant piping.

As shown in Fig. 1, the outdoor unit 2 accommodates therein a compressor 6, a four-way valve 8, a strainer 10, an expansion valve 12, and an outdoor heat exchanger 14, while the indoor unit 4 accommodates an indoor heat exchanger 16 therein. Those constituent elements are connected via refrigerant piping to define a refrigeration cycle.

More specifically, the compressor 6 and the indoor heat exchanger 16 are connected to each other via a first refrigerant pipe 18 to which the four-way valve 8 is fitted, and the indoor heat exchanger 16 and the expansion valve 12 are connected to each other via a second refrigerant pipe 20 to which the strainer 10 is fitted. Also, the expansion valve 12 and the outdoor heat exchanger 14 are connected to each other via a third refrigerant pipe 22, and the outdoor heat exchanger 14 and the compressor 6 are connected to each other via a fourth refrigerant pipe 24.

The four-way valve 8 is located midway on the fourth refrigerant pipe 24, and an accumulator 26 for separating a liquid phase refrigerant and a gas phase refrigerant is provided on the fourth refrigerant pipe 24 on a refrigerant suction side of the compressor 6. The compressor 6 and the third refrigerant pipe 22 are connected to each other via a fifth refrigerant pipe 28, on which a first solenoid valve 30 is provided.

Furthermore, a heat storage tank 32 accommodating a heat storage heat exchanger 34 therein is provided around the compressor 6 and filled with a heat storage material (for example, ethylene glycol aqueous solution) 36 for heat exchanging with the heat storage heat exchanger 34. The heat storage tank 32, the heat storage heat exchanger 34, and the heat storage material 36 constitute a heat storage device.

Also, the second refrigerant pipe 20 and the heat storage heat exchanger 34 are connected to each other via a sixth refrigerant pipe 38, and the heat storage heat exchanger 34 and the fourth refrigerant pipe 24 are connected to each other via a seventh refrigerant pipe 40. A second solenoid valve 42 is provided on the sixth refrigerant pipe 38.

The indoor unit 4 accommodates, in addition to the indoor heat exchanger 16, a fan (not shown), vertical wind direction changing blades (not shown), and horizontal wind direction changing blades (not shown). The indoor heat exchanger 16 exchanges heat between indoor air sucked into the indoor unit 4 by the fan and a refrigerant flowing through the indoor heat exchanger 16 so that air heated or cooled by the heat exchange may be blown into a room during heating or cooling, respectively. As occasion demands, the vertical wind direction changing blades vertically change the direction of air discharged from the indoor unit 4 and the horizontal wind direction changing blades horizontally change the direction of air discharged from the indoor unit 4.

The compressor 6, the fan, the vertical wind direction changing blades, the horizontal wind direction changing blades, the four-way valve 8, the expansion valve 12, the solenoid valves 30, 42, and the like are electrically connected to and controlled by a controller (for example, a microcomputer not shown).

A relation of connection and functioning of the component parts of the above-described refrigeration cycle equipment are explained hereinafter with a flow of the refrigerant, taking the case of the heating operation.

A refrigerant discharged from a discharge port in the compressor 6 passes through the four-way valve 8 and reaches the indoor heat exchanger 16 via the first refrigerant pipe 18. The refrigerant condenses in the indoor heat exchanger 16 upon heat exchange with indoor air, leaves the indoor heat exchanger 16, and passes through the second refrigerant pipe 20 and through the strainer 10, which prevents invasion of foreign substances into the expansion valve 12, before the refrigerant reaches the expansion valve 12. The refrigerant is reduced in pressure by the expansion valve 12 and reaches the outdoor heat exchanger 14 via the third refrigerant pipe 22. The refrigerant then evaporates in the outdoor heat exchanger 14 upon heat exchange with outdoor air and passes through the fourth refrigerant pipe 24, the four-way valve 8, and the accumulator 26, before the refrigerant returns to a suction port in the compressor 6.

The fifth refrigerant pipe 28 branched from the first refrigerant pipe 18 between the discharge port in the compressor 6 and the four-way valve 8 joins the third refrigerant pipe 22 between the expansion valve 12 and the outdoor heat exchanger 14 via the first solenoid valve 30.

Furthermore, the heat storage tank 32 accommodating therein the heat storage material 36 and the heat storage heat exchanger 34 is disposed so as to encircle and contact the compressor 6 to store heat generated by the compressor 6 in the heat storage material 36. The sixth refrigerant pipe 38 branched from the second refrigerant pipe 20 between the indoor heat exchanger 16 and the strainer 10 reaches an inlet of the heat storage heat exchanger 34 via the second solenoid valve 42, and the seventh refrigerant pipe 40 extending from an outlet of the heat storage heat exchanger 34 joins the fourth refrigerant pipe 24 between the four-way valve 8 and the accumulator 26.

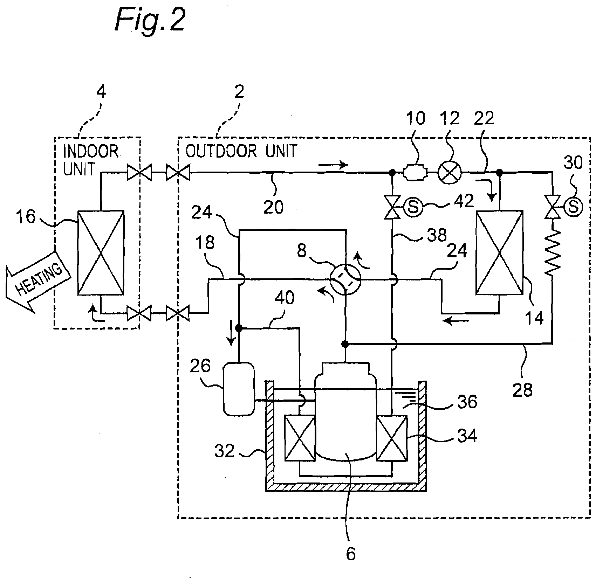

Operation of the air conditioner during normal heating is explained hereinafter with reference to Fig. 2 schematically depicting the operation of the air conditioner of Fig. 1 and a flow of the refrigerant during normal heating.

During normal heating, the first solenoid valve 30 and the second solenoid valve 42 are both closed. In this case, as described above, the refrigerant discharged from the discharge port in the compressor 6 passes through the four-way valve 8 and reaches the indoor heat exchanger 16 via the first refrigerant pipe 18. Having condensed in the indoor heat exchanger 16 upon heat exchange with indoor air, the refrigerant leaves the indoor heat exchanger 16, passes through the refrigerant pipe 20, and reaches the expansion valve 12. The refrigerant is then reduced in pressure by the expansion valve 12 and reaches the outdoor heat exchanger 14 via the third refrigerant pipe 22. Having evaporated in the outdoor heat exchanger 14 upon heat exchange with outdoor air, the refrigerant passes through the fourth refrigerant pipe 24 and through the four-way valve 8 and returns to the suction port in the compressor 6.

Heat generated by the compressor 6 is transferred from an outer wall of the compressor 6 to an outer wall of the heat storage tank 32 and stored in the heat storage material 36 accommodated in the heat storage tank 32.

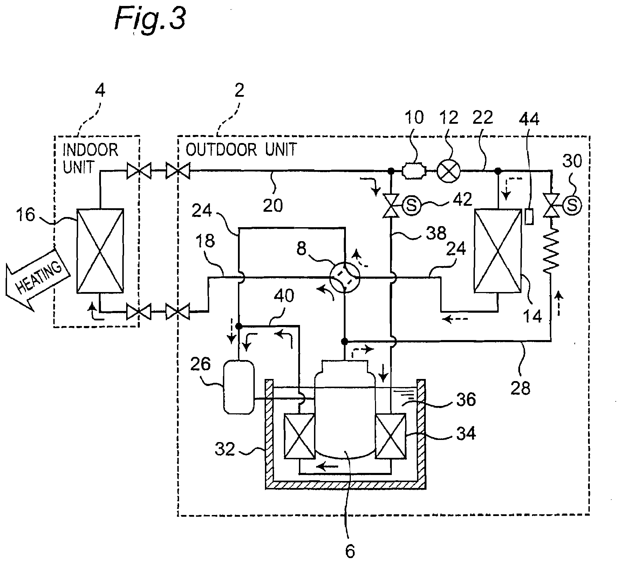

Operation of the air conditioner during defrosting/heating is next explained with reference to Fig. 3 schematically depicting the operation of the air conditioner of Fig. 1 and a flow of the refrigerant during defrosting/heating. In Fig. 3, solid arrows indicate a flow of refrigerant used for heating, and dotted arrows indicate a flow of refrigerant used for defrosting

If frost is formed and grows on the outdoor heat exchanger 14 during the above-discussed normal heating, the airflow resistance of the outdoor heat exchanger 14 increases to thereby reduce the amount of air passing therethrough, thus resulting in a reduction of the evaporating temperature in the outdoor heat exchanger 14. As shown in Fig. 3, the air conditioner according to the present invention is provided with a temperature sensor 44 for detecting a piping temperature of the outdoor heat exchanger 14, and if this temperature sensor 44 detects a reduced evaporating temperature compared with an evaporating temperature when no frost is formed, the controller outputs a command to shift the air conditioner from the normal heating operation to the defrosting/heating operation.

When the air conditioner is shifted from the normal heating operation to the defrosting/heating operation, the controller controls the first solenoid valve 30 and the second solenoid valve 42 to open them. In this case, in addition to the flow of refrigerant during the normal heating operation as discussed above, part of a gaseous refrigerant discharged from the discharge port in the compressor 6 passes through the fifth refrigerant pipe 28 and the first solenoid valve 30 and joins a refrigerant passing through the third refrigerant pipe 22 to heat the outdoor heat exchanger 14. Having condensed and turned into a liquid phase, the refrigerant passes through the fourth refrigerant pipe 24 and returns to the suction port in the compressor 6 via the four-way valve 8 and the accumulator 26.

Also, part of a liquid refrigerant diverged from the second refrigerant pipe 20 between the indoor heat exchanger 16 and the strainer 10 passes through the sixth refrigerant pipe 38 and the second solenoid valve 42 and absorbs heat from the heat storage material 36 when passing through the heat storage heat exchanger 34. The liquid refrigerant then evaporates and turns into a gas phase. The resultant gaseous refrigerant passes through the seventh refrigerant pipe 40, then joins a refrigerant passing through the fourth refrigerant pipe 24, and finally returns to the suction port in the compressor 6 via the accumulator 26.

Although the refrigerant returning to the accumulator 26 contains a liquid refrigerant returning from the outdoor heat exchanger 14, the latter is admixed with a gaseous high-temperature refrigerant returning from the heat storage heat exchanger 34 to thereby promote evaporation of the liquid refrigerant. Accordingly, it is not likely that a liquid refrigerant may pass through the accumulator 26 and return to the compressor 6, thus making it possible to enhance the reliability of the compressor 6.

At the initiation of defrosting/heating, the temperature of the outdoor heat exchanger 14 is below the freezing point by adhesion of frost, but when the outdoor heat exchanger 14 is heated by the gaseous refrigerant discharged from the discharge port in the compressor 6, frost adhering to the outdoor heat exchanger 14 melts in the vicinity of zero degree and the temperature of the outdoor heat exchanger 14 begins to increase upon termination of melting of the frost. When the temperature sensor 44 detects such a temperature rise of the outdoor heat exchanger 14, a determination is made that defrosting has been completed and the controller outputs a command to shift the defrosting/heating operation to the normal heating operation.

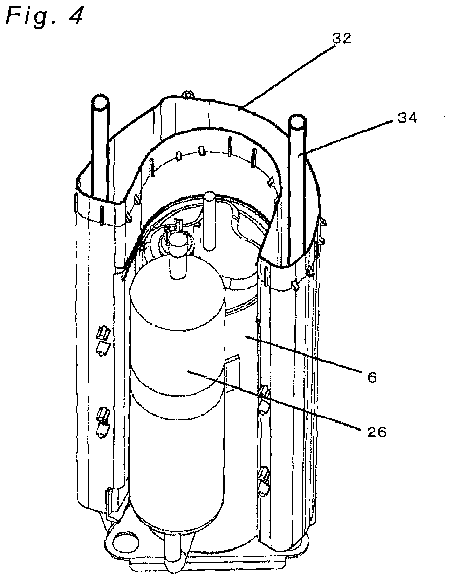

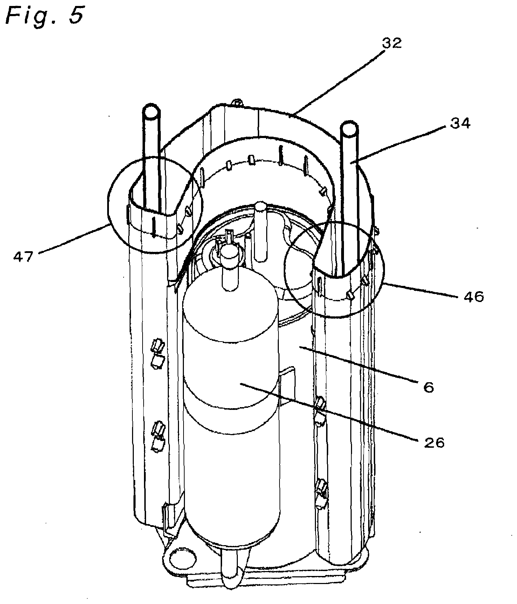

Fig. 4 depicts a state in which the heat storage device has been mounted to the compressor 6, to which the accumulator 26 has been fitted. As described above, the heat storage device includes the heat storage tank 32, the heat storage heat exchanger 34 and the heat storage material (not shown). The heat storage heat exchanger 34 is accommodated within the heat storage tank 32 and the heat storage material is filled in an internal space of the heat storage tank 32. Although the heat storage tank 32 is disposed around the compressor 6 so as to be held in contact therewith, the heat storage tank 32 is not in contact with the compressor 6 over the entire circumference thereof and part of the former is cut out so as not to interfere with the accumulator 26. Accordingly, the heat storage tank 32 has opposite end portions 46, 47 adjoining the cutout portion and closest to the accumulator 26 (see Fig. 5).

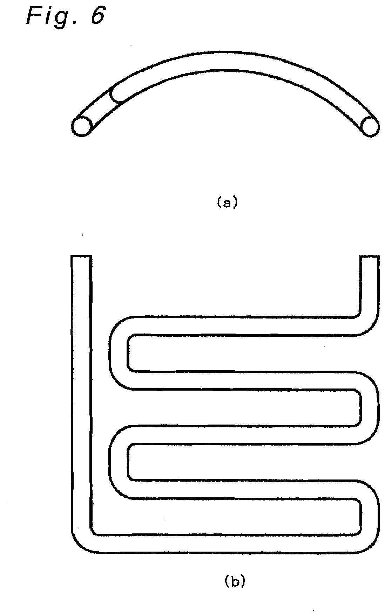

Fig. 6 depicts a configuration of the heat storage heat exchanger 34 accommodated in the heat storage tank 32. Fig. 6(a) is a top plan view of the heat storage heat exchanger 34 and Fig. 6(b) is a front view of the heat storage heat exchanger 34. The heat storage heat exchanger 34 is made of, for example, a copper pipe bent into a serpentine configuration. Considering efficient heat exchange between the heat storage material and a refrigerant, a preferred configuration of the heat storage heat exchanger 34 is such that so long as a pressure loss does not increase extremely when the refrigerant flows, the longer a pipe for heat exchanger is, the better. It is also preferable that the pipe for heat exchange be laid back and forth between the two end portions 46, 47 of the heat storage tank 32. It is also preferable that inlet and outlet pipes to and from the heat storage tank 32 be positioned adjacent to the end portions 46, 47, respectively.

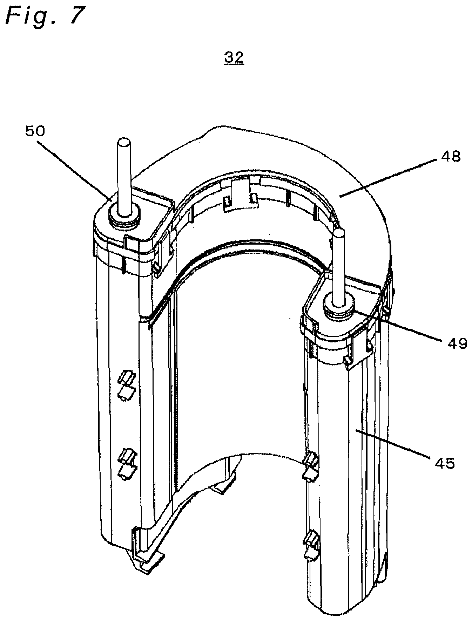

A state in which a lid 48 has been mounted on the heat storage tank 32 is shown in Fig. 7. The heat storage tank 32 includes an upwardly open tank body 45 made of a resin, a bottom plate (not shown), the lid 48 made of a resin for closing an upper opening of the tank body 45, and a packing (not shown) made of, for example, a silicon rubber and interposed between the tank body 45 and the lid 48. The lid 48 is screwed to the tank body 45. The inlet and outlet pipes of the heat storage heat exchanger 34 to and from the heat storage tank 32 are positioned at the opposite end portions of the heat storage tank 32, respectively. When it comes to the lid 48 mounted on the heat storage tank 32, the lid 48 is intended to prevent the heat storage material filled in the heat storage tank 32 from spilling over the heat storage tank 32 when the heat storage device has inclined or to prevent the heat storage material from evaporating when the temperature thereof has increased. The inlet and outlet pipes of the heat storage heat exchanger 34 to and from the heat storage tank 32 extend upwardly from the lid 48. One of the inlet and outlet pipes is connected to the sixth refrigerant pipe 38 (see Fig. 1) and the other of the inlet and outlet pipes is connected to the seventh refrigerant pipe 40 (see Fig. 1). Sealing members 49, 50 are provided between the inlet and outlet pipes of the heat storage heat exchanger 34 to and from the heat storage tank 32 and respective holes defined in the lid 48 through which the inlet pipe and outlet pipes extend. The sealing members 49, 50 are made of a resin such as, for example, silicone and have an inner diameter slightly less than an outer diameter of the inlet and outlet pipes of the heat storage heat exchanger 34 and an outer diameter slightly greater than a diameter of the holes in the lid 48 through which the inlet pipe and outlet pipes of the heat storage heat exchanger 34 extend. By this configuration, as described above, the sealing members 49, 50 act to prevent the heat storage material filled in the heat storage tank 32 from spilling over the heat storage tank 32 when the heat storage device has inclined or to prevent the heat storage material from evaporating when the temperature thereof has increased. The provision of the sealing members 49, 50 on the lid 48 requires the lid 48 to have spaces for mounting them thereon. If a cross-sectional shape of the heat storage tank 32 is approximately the same as a projection shape of the lid 48, the end portions of the heat storage tank 32 are each required to have a certain space.

Fig. 8 depicts the cross-sectional shape of the heat storage tank 32 and as shown therein, the compressor 6 is located centrally. Reference numerals 51, 52 indicate widths of the heat storage tank 32. The width 51 of a portion of the heat storage tank 32 held in contact with the compressor 6 is determined as being a length of a portion cut along a line extending radially outwardly from a center of the compressor 6. On the other hand, the width 52 of another portion of the heat storage tank 32 not in contact with the compressor 6 is determined as being continuously extended from the width 51 of the portion of the heat storage tank 32 held in contact with the compressor 6. The widths of the opposite end portions 46, 47 of the heat storage tank 32 are never less than those of any other portions in order to secure spaces for the sealing members 49, 50 on the lid 48, as described above. That is, the widths of the opposite end portions 46, 47 of the heat storage tank 32 are greater than that of the thinnest portion of the heat storage tank 32. This configuration can increase the capacity of the heat storage tank 32 to increase the volume of the heat storage material 36, thus resulting in an increase in the amount of heat stored in the heat storage material 36 during normal heating. Accordingly, the defrosting performance during defrosting/heating can be enhanced.

It is to be noted here that the inlet and outlet pipes of the heat storage heat exchanger 34 are not necessarily located separately at the opposite end portions and can be both located at any one of the opposite end portions. In this case, any one of the opposite end portions is not the thinnest portion of the heat storage tank 32 and the other of the opposite end portions does not apply to this, but may become the thinnest portion as occasion demands.

Separately from the above-described example, because of an installation space of the entire heat storage device, the heat storage tank 32 must be reduced in size for space saving while securing the spaces required to attach the sealing members 49, 50 to the opposite end portions of the heat storage tank 32. That is, if other portions of the heat storage tank 32 are made thin with sufficient widths of the opposite end portions secured, the installation space of the entire heat storage device can be reduced. Even in this case, if the inlet and outlet pipes of the heat storage heat exchanger 34 are not located separately at the opposite end portions 46, 47, but both located at any one of the opposite end portions 46, 47, a sufficient space is not required for both the end portions, but required for only one of them to which the inlet and outlet pipes of the heat storage heat exchanger 34 are fitted and, hence, the other end portion can be made thin, thus resulting in space saving.

Also, separately from the above-described example, because a space originally present between the compressor 6 and the accumulator 26 is a vacant space, removal of this space does not lead to space saving of the entire heat storage device. For this reason, the space saving of the entire heat storage device achieved by making the widths of other portions of the heat storage tank 32 thin with the widths of the end portions secured can secure the volume of the heat storage tank 32 while making effective use of the aforementioned space.

Because irregularities caused by welding during manufacture of the compressor 6 or asperities exist on a surface of the compressor 6, when the heat storage tank 32 is mounted to the compressor 6, a difficulty is encountered in bringing mutually opposing surfaces into close contact with each other. Because of this, in the practice of the present invention, a tacky and elastic resin sheet (for example, silicone, not shown) that is superior in heat-transfer performance is sandwiched between the compressor 6 and the heat storage tank 32. The resin sheet has a thickness of 0.5-3 mm, which is appropriate to improve the reduced degree of contact caused by the irregularities or asperities on the surface of the compressor 6, while maintaining the heat-transfer performance. Alternatively, in order to enhance the degree of contact between the compressor 6 having the irregularities or asperities on the surface thereof and the heat storage tank 32, a recess having, for example, a U-shaped cross-section is effectively formed in a portion of the heat storage tank 32 that is brought into contact with the irregularities on the surface of the compressor 6.

Because the heat storage tank 32 is mounted to the compressor 6 so as to be held in close contact therewith, an inner diameter of the portion of the heat storage tank 32 that is in contact with the compressor 6 is set to a value slightly greater (about 2 mm) than an outer diameter of the compressor 6 in consideration of, for example, mounting tolerances including the thickness of the heat-transfer sheet. Alternatively, in applications where the heat storage tank 32 is an elastic body made of, for example, a resin and mounted to the compressor 6 with the opposite end portions 46, 47 thereof broadened outwardly, the inner diameter of the portion of the heat storage tank 32 that is in contact with the compressor 6 is set to a value slightly less (about 2 mm) than the outer diameter of the compressor 6 in order to enhance the degree of contact between the heat storage tank 32 and the compressor 6.

In Fig. 8, the compressor 6 is held in contact with the heat storage tank 32 in an angular range of about 180 degrees of the entire circumference thereof. In this case, the heat storage tank 32 can be easily mounted to the compressor 6 from the side and not from above. However, if the heat storage tank 32 is mounted to the compressor 6 from above and, for example, when the aforementioned heat-transfer sheet is sandwiched between the compressor 6 and the heat storage tank 32, the heat-transfer sheet is required to be wrapped around the compressor 6 in advance or attached to the portion of the heat storage tank 32 that is brought into contact with the compressor 6. If the tacky heat-transfer sheet is wrapped around the compressor 6, the heat storage tank 32 must be mounted to the compressor 6 without contacting the heat-transfer sheet. However, this is difficult and if the heat storage tank 32 is brought into contact with the heat-transfer sheet during mounting, the heat-transfer sheet is peeled off. Also, if the heat storage tank 32 is removed from the compressor 6 for some reason or for maintenance of the former after the former has been mounted to the latter and if a discharge pipe (not shown) of the compressor 6 extends above the heat storage tank 32, the discharge pipe becomes a hindrance to upward removal of the heat storage tank 32 from the compressor 6. Accordingly, the heat storage tank 32 cannot be removed unless the discharge pipe is removed.

On the other hand, if the heat storage tank 32 can be mounted to and removed from the compressor 6 from the side and if the heat storage tank 32 is an elastic body and the opposite end portions 46, 47 thereof can be broadened outwardly, the heat storage tank 32 can be mounted to the compressor 6 without contacting the tacky heat-transfer sheet wrapped around the compressor 6. Also, if the heat storage tank 32 is removed from the compressor 6 for maintenance of the former and even if the discharge pipe of the compressor 6 extends above the heat storage tank 32, the discharge pipe is not required to be removed if only inlet and outlet pipes of the heat storage heat exchanger 34 are removed. In general, of refrigerant pipes, a relatively large pipe is used for the discharge pipe of the compressor 6 and, hence, a lot of labor is required during welding in mounting and dismounting the discharge pipe as compared with other pipes. Accordingly, such a labor can be dispensed with.

In addition to the above, as shown in Fig. 8, if a line 55 for connecting end edges 53, 54 of the opposite end portions 46, 47 of the heat storage tank 32 to each other does not pass transversely across a projection plane of the compressor 6, i.e., if the line 55 for connecting the opposite end edges 53, 54 of the heat storage tank 32 to each other does not extend through or above the compressor 6, the end portions 46, 47 of the heat storage tank 32 can be lengthened. Hence, the end portions 46, 47 of the heat storage tank 32 can be easily broadened outwardly, thus making it possible to easily mount the heat storage tank 32 to the compressor 6. In particular, in the case where a tacky heat-transfer sheet for promotion of heat transfer is interposed between the heat storage tank 32 and the compressor 6, if the heat storage tank 32 sticks to the heat-transfer sheet in the course of mounting the heat storage tank 32 to the compressor 6, it becomes difficult to continue the mounting work any longer. Accordingly, the heat storage tank 32 must be mounted to the compressor 6 with the heat storage tank 32 broadened sufficiently. For this reason, it is very effective to lengthen the opposite end portions 46, 47 of the heat storage tank 32 because the heat storage tank 32 can be easily broadened.

In order to enhance the degree of contact between the compressor 6 and the heat storage tank 32, it is preferred that the portion of the compressor 6 that is in contact with the heat storage tank 32 be in an angular range of over 180 degrees of the entire circumference of the compressor 6 on the assumption that the heat storage tank 32 is made of, for example, a resin and accordingly deforms elastically and that the heat storage tank 32 is mounted to the compressor 6 with the former broadened outwardly. However, considering that broadening the heat storage tank 32 too much may damage the heat storage tank 32, the angular range is not greater than 200 degrees.

The heat storage device of the above-described construction operates as follows.

As described above, the heat storage tank 32 acts to store heat generated by the compressor 6 in the heat storage material 36 during normal heating and when the normal heating operation is shifted to the defrosting/heating operation, part of a liquid-phase refrigerant diverged from the second refrigerant pipe 20 between the indoor heat exchanger 16 and the strainer 10 absorbs heat from the heat storage material 36 in the heat storage heat exchanger 34, and the liquid-phase refrigerant then evaporates and turns into a gas phase. Accordingly, a higher efficiency of absorbing heat generated by the compressor 6 is desirable. Although the efficiency of heat absorption depends on the degree of contact between the heat storage tank 32 and the compressor 6, because the compressor 6 is cylindrical and made of a metal and accordingly has irregularities on an outer surface thereof, the tacky heat-transfer sheet is sandwiched between the compressor 6 and the heat storage tank 32 to enhance the degree of contact between the compressor 6 and the heat storage tank 32 to thereby enhance the efficiency of heat absorption.

Heat stored in the heat storage tank 32 during normal heating is used to melt frost during defrosting/heating and, hence, the defrosting performance can be increased to store high-temperature heat in the heat storage material 36 during normal heating. That is, even if the normal heating time and the surface temperature of the compressor 6 are the same, the temperature of the heat storage material 36 does not increase desirably when heat transfer from the surface of the compressor 6 to the heat storage material 36 stored in the heat storage tank 32 is bad, but increases desirably when heat transfer from the surface of the compressor 6 to the heat storage material 36 is good. What is to contribute to heat transfer is the degree of contact between the heat storage tank 32 and the compressor 6 and if air exists between them, it shows a heat insulating effect and accordingly lowers a heat transfer rate.

In order to improve the above-discussed points, in the practice of the present invention, a tacky heat-transfer sheet of an appropriate thickness is sandwiched between the compressor 6 and the heat storage tank 32 to enhance the degree of contact between them to thereby increase the heat-transfer performance. Because the heat-transfer sheet is peeled off if the heat storage tank 32 is mounted to the compressor 6 from above, the angular range of a portion of the heat storage tank 32 that is brought into contact with the compressor 6 is set to below 200 degrees so that the heat storage tank 32 can be mounted to the compressor 6 from the side. Also, the heat storage tank 32 made of a resin is configured to have easy-to-hold opposite end portions so as to be easily mounted to the compressor 6 with the opposite end portions broadened outwardly. The heat storage tank 32 is fixed to the compressor 6 by a belt (not shown).

The above-described configuration makes it possible to store a sufficient amount of heat in the heat storage material during normal heating and increase the temperature of the heat storage material for a subsequent defrosting/heating operation, thus resulting in an increase in defrosting performance. When it comes to inlet and outlet pipes of the heat storage heat exchanger 34 extending from the heat storage tank 32, they are respectively positioned at the opposite end portions 46, 47 of the heat storage tank 32 and, hence, the lid 48 requires the sealing members 49, 50 and packing, thus resulting in an increase in width of the end portions 46, 47.

As described above, heat stored in the heat storage material 36 accommodated in the heat storage tank 32 during normal heating is used for defrosting during defrosting/heating and also used as an auxiliary heat source when the normal heating operation is again conducted after the defrosting/heating operation or after the equipment has been brought to a stop, thereby making it possible to quickly initiate the heating operation.

It is to be noted here that only an example of the refrigeration cycle employing the heat storage device according to the present invention has been explained in the above-described embodiment and the present invention is naturally not limited to the embodiment.

### Industrial Applicability

The heat storage device according to the present invention is intended to store waste heat generated by a compressor in a heat storage material and is effectively applicable to air conditioners, refrigerators, water heaters, heat pump washing machines, and the like.

### Explanation of reference numerals

- 2: outdoor unit, 4 indoor unit, 6 compressor, 8 four-way valve,
- 10: strainer, 12 expansion valve, 14 outdoor heat exchanger,
- 16: indoor heat exchanger, 18 first refrigerant pipe,
- 20: second refrigerant pipe, 22 third refrigerant pipe,
- 24: fourth refrigerant pipe, 26 accumulator, 28 fifth refrigerant pipe,
- 30: first solenoid valve, 32 heat storage tank,
- 34: heat storage heat exchanger, 36 heat storage material,
- 38: sixth refrigerant pipe, 40 seventh refrigerant pipe,
- 42: second solenoid valve, 44 temperature sensor,
- 45: heat storage tank body, 46,47 end portion, 48 lid,
- 49, 50: sealing member, 51, 52 width, 53,54 end edge,
- 55: line connecting opposite end edges to each other.

## Claims

1. An air conditioner having a compressor (6) and a heat storage device, the heat storage device being adapted for being disposed around and held in contact with the compressor (6), the heat storage device comprising:
a heat storage material (36) that stores heat generated by the compressor (6);
a heat storage tank (32) that accommodates the heat storage material (36), the heat storage tank (32) having opposite end edges (46,47); and
a heat storage heat exchanger (34) accommodated within the heat storage tank (32);
wherein the heat storage tank (32) is adapted for being disposed around the compressor (6) so as to extend from one end edge (46) of the heat storage tank (32) to the other end edge (47) of the heat storage tank (32) along an outer circumference of the compressor (6),
**characterized in that**
the heat storage tank (32) is adapted for being in contact with the compressor (6) in an angular range not greater than 200 degrees of an entire circumference of the compressor (6) and a line (55) connecting the opposite end edges of the heat storage tank (32) does not pass across a projection plane of the compressor (6).

2. The air conditioner according to claim 1, further comprising a heat-transfer sheet adapted for being interposed between the compressor (6) and the heat storage tank (32).

3. The air conditioner according to claim 1 or 2, wherein the heat storage tank (32) is made of a resin and mounted to the compressor (6) from the side.

## Patentansprüche

1. Klimaanlage aufweisend einen Kompressor (6) und eine Wärmespeichervorrichtung, wobei die Wärmespeichervorrichtung dafür ausgelegt ist, um den Kompressor (6) herum angeordnet und mit diesem in Kontakt gehalten zu werden, wobei die Wärmespeichervorrichtung enthält:
ein Wärmespeichermaterial (36), das die vom Kompressor (6) erzeugte Wärme speichert;
einen Wärmespeicherbehälter (32), in dem das Wärmespeichermaterial (36) untergebracht ist, wobei der Wärmespeicherbehälter (32) entgegengesetzte Endbereiche (46, 47) aufweist; und
einen Wärmespeicher-Wärmetauscher (34), der in dem Wärmespeicherbehälter (32) untergebracht ist;
wobei der Wärmespeicherbehälter (32) dafür ausgelegt ist, um den Kompressor (6) herum angeordnet zu werden, so dass dieser sich von einem Endbereich (46) des Wärmespeicherbehälters (32) zu dem anderen Endbereich (47) des Wärmespeicherbehälters (32) entlang eines Außenumfangs des Kompressors (6) erstreckt,
**dadurch gekennzeichnet, dass**
der Wärmespeicherbehälter (32) dafür ausgelegt ist, mit dem Kompressor (6) in einem Winkelbereich von nicht mehr als 200 Grad eines gesamten Umfangs des Kompressors (6) in Kontakt zu stehen, und dass eine die gegenüberliegenden Endbereiche des Wärmespeicherbehälters (32) verbindende Linie (55) nicht über eine Projektionsebene des Kompressors (6) verläuft.

2. Klimaanlage nach Anspruch 1, ferner enthaltend eine Wärmeübertragungsschicht, die dafür ausgelegt ist, zwischen dem Kompressor (6) und dem Wärmespeicherbehälter (32) angeordnet zu sein.

3. Klimaanlage nach Anspruch 1 oder 2, wobei der Wärmespeicherbehälter (32) aus einem Harz besteht und seitlich am Kompressor (6) angebracht ist.

## Revendications

1. Climatiseur comprenant un compresseur (6) et un dispositif de stockage de chaleur, ledit dispositif de stockage de chaleur étant adapté pour être disposé autour du compresseur (6) et être maintenu en contact avec celui-ci, ledit dispositif de stockage de chaleur comprenant:
une matière d'accumulation de chaleur (36) qui stocke de la chaleur générée par le compresseur (6);
un réservoir de stockage de chaleur (32) qui abrite ladite matière d'accumulation de chaleur (36), ledit réservoir de stockage de chaleur (32) ayant des zones d'extrémité (46, 47) opposées; et
un échangeur de chaleur à accumulation de chaleur (34) qui est logé à l'intérieur du réservoir de stockage de chaleur (32);
dans lequel ledit réservoir de stockage de chaleur (32) est adapté pour être disposé autour du compresseur (6) de manière à s'étendre d'une zone d'extrémité (46) du réservoir de stockage de chaleur (32) à l'autre zone d'extrémité (47) du réservoir de stockage de chaleur (32) le long d'une circonférence extérieure du compresseur (6),
**caractérisé par le fait que**
le réservoir de stockage de chaleur (32) est adapté pour être en contact avec le compresseur (6) dans une plage angulaire qui n'est pas supérieure à 200 degrés de toute une circonférence du compresseur (6), et qu'une ligne (55) reliant les zones d'extrémité opposées du réservoir de stockage de chaleur (32) ne passe pas en travers d'un plan de projection du compresseur (6).

2. Climatiseur selon la revendication 1, comprenant en outre une couche de transfert de chaleur qui est adaptée pour être interposée entre le compresseur (6) et le réservoir de stockage de chaleur (32).

3. Climatiseur selon la revendication 1 ou 2, dans lequel ledit réservoir de stockage de chaleur (32) est fait à partir d'une résine et est monté latéralement sur le compresseur (6).
